# EUROPEAN PATENT SPECIFICATION

(11) **EP 1 530 002 B1**
(45) Date of publication and mention of the grant of the patent: **10.05.2006**
(21) Application number: 03425716.2
(22) Date of filing: 04.11.2003
(51) Int. Cl.: F17C 13/04

(54) **Valve for containers of pressurized fluids with dirt blocking device**
Druckbehälterventil mit Schmutzabfangvorrichtung
Réservoir pour fluide sous pression avec protection contre la contamination

(43) Date of publication of application: 11.05.2005
(73) Proprietor: Cavagna Group S.p.A., 25010 Ponte S. Marco (Prov. of Brescia) (IT)
(72) Inventor: Cavagna, Ezio, 25100 Brescia (IT)
(74) Representative: Modiano, Micaela Nadia

(56) References cited:
- EP-A- 0 393 234
- DE-A- 3 734 050
- GB-A- 1 152 890
- US-A- 3 386 479
- US-A- 4 971 224
- US-A1- 2003 111 136

## Description

The present invention relates to a valve for containers of pressurized fluids with dirt blocking device.

As is known, so-called quick-coupling valves for containers of pressurized fluids are already commercially available which generally have a valve body that forms a cylindrical inlet inside which there is a cylindrical cavity in which the flow control element can perform an axial translational motion.

To prevent the infiltration of dirt in the valve, rigid dirt blocking devices are provided which in practice provide protection at the rim, substantially closing at the free end the gap formed between the cylindrical cavity and the flow control element.

GB 1,152,890, considered as closest prior art, according to the preamble of independent claim 1, discloses a safety closure assembly for a valve adapted to be mounted on a receptacle containing a fluid under pressure. The patent discloses a valve assembly provided with a sealing element arranged adjacent to the free end of the outlet of the valve, said sealing element avoiding the undesired introduction of air into the conduit or into the bottle or receptacle and at the same time avoiding the entering of foreign matter into the inner space of the valve. The patent discloses the presence of a single gasket element which provides primarily a sealing function.

EP-A-0 393 234 discloses a gas bottle valve provided with a pressure regulator. The valve has a spring-loaded closing body and two sealing rings which provide the hermetic sealing of the valve. The document does not teach the necessity of avoiding the entering of foreign matter into the valve.

So-called "quick-on" valves have been introduced commercially which correspond to G52, G53 and G54 connections, according to EN 12864 standard, which have the same type of coupling but have a smaller diameter and a particular geometry of the male coupling element that would interfere with the rigid dirt blocking device.

Accordingly, with these valves, in order to prevent dirt penetration it is currently necessary to resort to the use of an external plug, which constitutes a separate element that is therefore awkward to use.

The aim of the invention is to solve the problem described above by providing a valve for containers of pressurized fluids with dirt blocking device, which allows to provide adequate protection to so-called quick-on valves, without having any interference or hindrance during coupling to the male coupling element and without having to provide a separate element

Within this aim, an object of the invention is to provide a valve in which the dirt blocking device can be applied rapidly and easily, thus allowing to prevent infiltrations that might cause problems in the operation of the valve and further providing a suitable protection of the primary sealing gasket for coupling to the regulator.

Another object of the present invention is to provide a valve that thanks to its particular constructive characteristics is capable of giving the greatest assurances of reliability and safety in use.

Another object of the present invention is to provide a valve that can be easily obtained starting from commonly commercially available elements and materials and is also competitive from a merely economical standpoint.

This aim and these and other objects that will become better apparent hereinafter are achieved by a valve for containers of pressurized fluids with dirt blocking device, according to the invention, comprising a valve body that forms a cylindrical inlet inside which there is a cylindrical cavity in which a flow control element can perform an axial translational motion, said flow control element defining an interspace with the internal surface of said cylindrical cavity and being arrangeable, in the closed position, substantially flush with the axial end of said cylindrical inlet, characterized in that it comprises a dirt blocking device for the removable closure of said interspace that is arranged at the upper end of said interspace and has at least one portion that yields elastically when the male coupling element is inserted in said cylindrical cavity.

Further characteristics and advantages will become better apparent from the description of a preferred but not exclusive embodiment of a valve for containers of pressurized fluids, with dirt blocking device, illustrated by way of nonlimiting example in the accompanying drawings, wherein:
Figure 1 is a schematic perspective view of the valve for containers of pressurized fluids according to the invention;
Figure 2 is a sectional perspective view of the valve, taken along a diametrical plane;
Figure 3 is a schematic sectional view of the valve with an exploded view of the male coupling element;
Figure 4 is a view of the valve with the male coupling element coupled thereto.

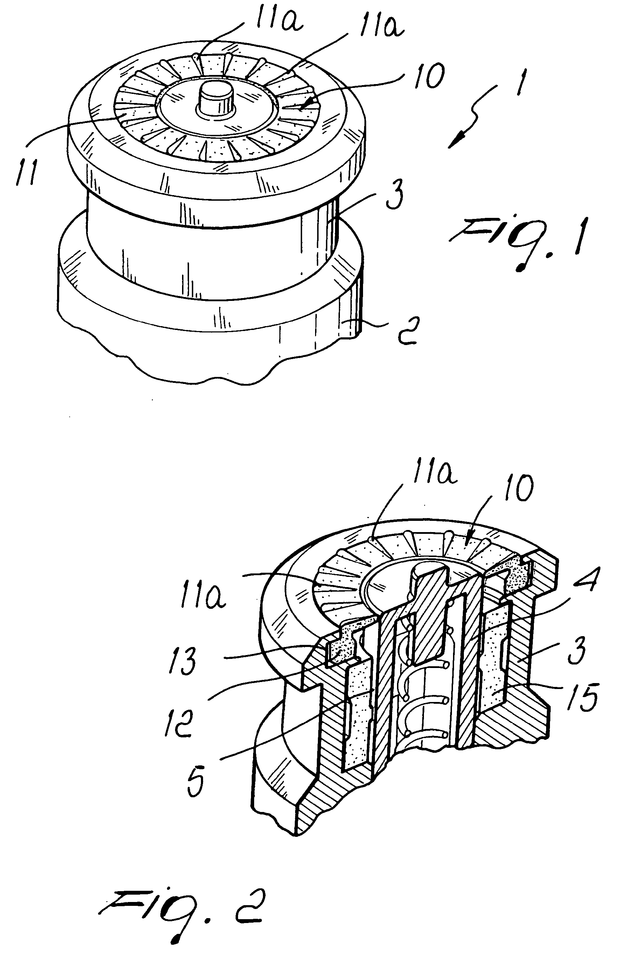

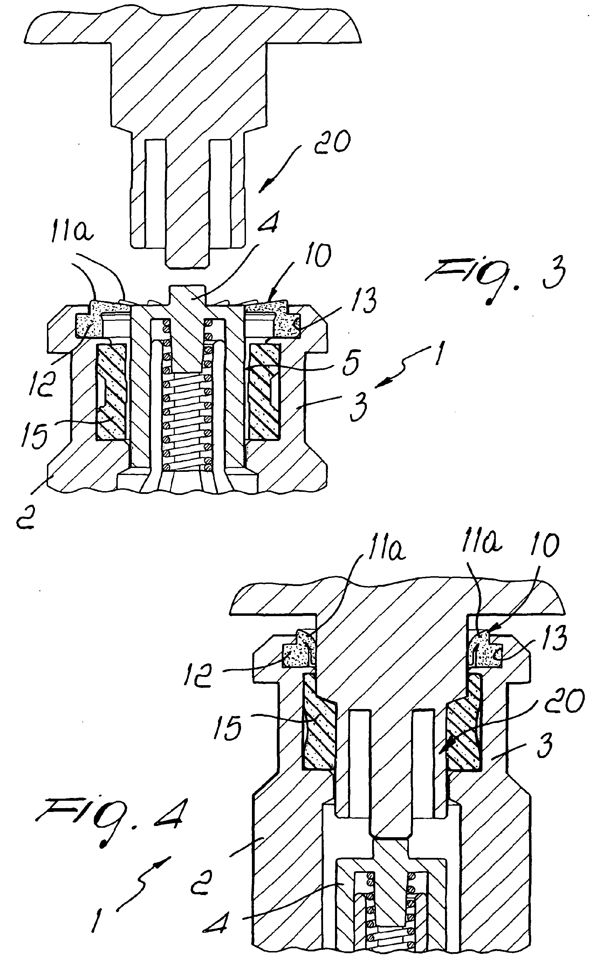

With reference to the figures, the valve for containers of pressurized fluids with dirt blocking device according to the invention, generally designated by the reference numeral 1, is advantageously of the G52, G53 and G54 type according to EN 12864 standard; said valve, which is commonly known as "quick-on" valve, comprises a valve body, generally designated by the reference numeral 2, on which there is a cylindrical inlet 3 inside which there is a cylindrical cavity in which a flow control element 4 can perform an axial translational motion, defining an interspace 5 with the inside wall of the cylindrical cavity.

The flow control element 4, at its axial end, is arranged in the closed condition substantially flush with the axial end of the cylindrical inlet 3.

In the annular ring that remains between the end of the flow control element and the axial end of the cylindrical cavity there is a dirt blocking device, generally designated by the reference numeral 10, which has the particularity that it is connected directly to said cylindrical cavity and is obtained by means of a body made of elastically yielding material that has an annular lip 11, which surrounds the flow control element and protrudes from an annular body 12 that is accommodated in a seat 13 provided at the axial end of the cylindrical cavity.

The annular lip 11 is provided in an upward region with radial ridges 11a and lies substantially on a plane that is substantially perpendicular to the axis and protrudes toward the center with respect to the annular body 12.

The lip 1 1 forms in practice a portion that yields elastically upon insertion of the male coupling element, generally designated by the reference numeral 20, which is designed to cause the translational motion of the flow control element 4 and to engage so as to deform a sealing gasket 15 that is accommodated in the interspace 5 and accordingly is accommodated in a region that is protected by the device 10.

With this arrangement, therefore, it is possible to have a dirt blocking device that is fixed directly to the valve, closes axially the interspace of the cylindrical cavity of the valve and can be moved automatically by the insertion of the male element, thus solving a problem that is strongly felt in the field, since with this type of valve it was not possible to use substantially annular conventional rigid dirt blocking devices.

From what has been described above it is thus evident that the invention achieves the intended aim and objects and in particular the fact is stressed that it is possible to provide, thanks to particularly simple and economically advantageous means, an adequate protection to the primary gasket and to all the movable components of a valve which, in view of its reduced dimensions and its particular geometry, is difficult to protect with the solutions of the prior art.

The invention thus conceived is susceptible of numerous modifications and variations, all of which are within the scope of the inventive concept.

All the details may further be replaced with other technically equivalent elements.

In practice, the materials employed, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A valve (1) for containers of pressurized fluids with dirt blocking device, comprising a valve body (2) that forms a cylindrical inlet (3) inside which there is a cylindrical cavity in which a flow control element (4) can perform an axial translational motion, said flow control element (4) defining an interspace (5) with the internal surface of said cylindrical cavity and being arrangeable, in the closed position, substantially flush with the axial end of said cylindrical inlet (3), further comprising a sealing element (15) provided inside said interspace (5) and a dirt blocking device (10) made of elastically yielding material for the removable closure of said interspace (5) that is arranged at the upper end of said interspace (5), said sealing element (15) and said blocking device (10) being distinct, the sealing element (15) being accommodated in a region that is protected by the blocking device (10), and said blocking device (10) having an annular body (12)**, characterized in that** an annular lip (11) that surrounds said flow control element (4) protrudes from said annular lip said annular lip (11) having at least one portion that is suitable to elastically yield when a male coupling element (20) is inserted in said cylindrical cavity.

2. The valve (1) according to claim 1, **characterized in that** said annular lip (11) is arranged substantially on a plane that is substantially perpendicular to the axis of said cylindrical inlet (3).

3. The valve (1) according to one or more of the preceding claims, **characterized, in that** it comprises radial ridges (11a) formed on the upper face of said lip (11).

## Patentansprüche

1. Ein Ventil (1) fiir Behälter von unter Druck stehenden Fluiden mit Schmutzhemmvorrichtung, einschließend einen Ventilkörper (2), welcher einen zylindrischen Einlass (3) formt, innerhalb dessen es einen zylindrischen Hohlraum gibt, in dem ein Durchflussregelungselement (4) eine axiale translatorische Bewegung ausüben kann, wobei besagtes Durchflussregelungselement (4) zusammen mit der Innenfläche von besagtem zylindrischem Hohlraum einen Zwischenraum (5) definiert und, in der geschlossenen Position, mit dem axialen Ende von besagtem zylindrischen Einlass (3) im Wesentlichen bündig ausrichtbar ist, ferner einschließend ein innerhalb besagtem Zwischenraum (5) angeordnetes Dichtungselement (15) und eine Schmutzhemmvorrichtung (10) aus elastisch nachgiebigem Material zum lösbaren Verschließen von besagtem Zwischenraum (5), welche sich am oberen Ende von besagtem Zwischenraum (5) befindet, wobei besagtes Dichtungselement (15) sich von besagter Hemmvorrichtung (10) unterscheidet, das Dichtungselement (15) in einem Bereich angeordnet ist, welcher durch die Hemmvorrichtung (10) geschützt ist, und wobei besagte Hemmvorrichtung (10) einen ringförmigen Körper (12) aufweist, **dadurch gekennzeichnet, dass** eine ringförmige Lippe (11), welche besagtes Durchflussregelungselement (4) umgibt, von besagter ringförmigen Lippe hervorragt, wobei besagte ringförmige Lippe (11) wenigstens einen Bereich aufweist, der geeignet ist, um elastisch nachzugeben, wenn ein männliches Kupplungselement (20) in besagten zylindrischen Hohlraum eingeführt wird.

2. Das Ventil (1) nach Anspruch 1, **dadurch gekennzeichnet, dass** sich besagte ringförmige Lippe (11) im Wesentlichen auf einer Ebene befindet, die im Wesentlichen senkrecht zur Achse von besagtem zylindrischen Einlass (3) ist.

3. Das Ventil (1) nach einem oder mehreren der vorangehenden Ansprüche, **dadurch gekennzeichnet, dass** es auf der Oberseite von besagter Lippe (11) geformte radiale Rippen (11a) einschließt.

## Revendications

1. Soupape (1) pour des récipients de fluides sous pression avec un dispositif de blocage de poussière, comprenant un corps de soupape (2) qui forme une entrée cylindrique (3) à l'intérieur de laquelle se trouve une cavité cylindrique dans laquelle un élément de régulation du débit (4) peut réaliser un mouvement axial de translation, ledit élément de régulation du débit (4) définissant un espacement (5) avec la surface interne de ladite cavité cylindrique et pouvant être agencé, dans la position fermée, sensiblement en affleurement avec l'extrémité axiale de ladite entrée cylindrique (3), comprenant en outre un élément d'étanchéité (15) pourvu à l'intérieur dudit espacement (5) et un dispositif de blocage de poussière (10) fabriqué à partir d'un matériau coulissant de manière élastique pour une fermeture amovible dudit espacement (5) qui est agencé au niveau de l'extrémité supérieure dudit espacement (5), ledit élément d'étanchéité (15) et ledit dispositif de blocage de poussière (10) étant distincts, ledit élément d'étanchéité (15) étant aménagé dans une région qui est protégée par le dispositif de blocage (10), et ledit dispositif de blocage (10) présentant un corps annulaire (12), **caractérisée en ce qu'**une lèvre annulaire (11) qui entoure ledit élément de régulation du débit (4) fait saillie depuis ladite lèvre annulaire, ladite lèvre annulaire (11) présentant au moins une partie qui est appropriée pour coulisser de manière élastique quand un élément de couplage mâle (20) est inséré dans ladite cavité cylindrique.

2. Soupape (1) selon la revendication 1, **caractérisée en ce que** ladite lèvre annulaire (11) est agencée sensiblement sur un plan qui est sensiblement perpendiculaire à l'axe de ladite entrée cylindrique (3).

3. Soupape (1) selon une ou plusieurs des revendications précédentes, **caractérisée en ce qu'**elle comprend des nervures radiales (11a) formées sur la face supérieure de ladite lèvre (11).
